(19)

Europäisches
Patentamt
European
Patent Office
Office européen
des brevets

(11)     **EP 1 989 750 B1**

(12)     **EUROPEAN PATENT SPECIFICATION**

(45) Date of publication and mention
of the grant of the patent:
**23.12.2009  Bulletin 2009/52**

(51) Int Cl.:
***H01M 8/16*** (2006.01)

(86) International application number:
**PCT/NL2007/000038**

(21) Application number: **07715837.6**

(22) Date of filing: **13.02.2007**

(87) International publication number:
**WO 2007/094658 (23.08.2007 Gazette 2007/34)**

(54) **DEVICE COMPRISING A NEW CATHODE SYSTEM AND METHOD FOR GENERATING ELECTRICAL ENERGY WITH USE THEREOF**

VORRICHTUNG MIT EINEM NEUEN KATHODENSYSTEM UND EIN VERFAHREN ZUR ERZEUGUNG ELEKTRISCHER ENERGIE MITTELS DIESER VORRICHTUNG

DISPOSITIF COMPRENANT UN NOUVEAU SYSTEME DE CATHODE ET PROCEDE DE PRODUCTION D'ENERGIE ELECTRIQUE L'UTILISANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.02.2006  NL 1031147**

(43) Date of publication of application:
**12.11.2008  Bulletin 2008/46**

(73) Proprietor: **MAGNETO SPECIAL ANODES B.V.**
**3125 BA Schiedam (NL)**

(72) Inventors:
• **TER HEIJNE, Annemiek**
**6866-CH Heelsum (NL)**

• **HAMELERS, Hubertus Victor Marie**
**6866-BX Heelsum (NL)**
• **BUISMAN, Cees, Jan, Nico**
**8571-RH Harich (NL)**

(74) Representative: **van Kooij, Adriaan et al**
**Arnold & Siedsma**
**Sweelickplein 1**
**2517 GK Den Haag (NL)**

(56) References cited:
**WO-A-01/04061          WO-A2-2004/004036**
**WO-A2-2005/001981**

EP 1 989 750 B1

**Description**

The present invention according to a first aspect relates to a device provided with an anode on which an oxidation reaction can occur and a cathode on which a reduction reaction can occur. Such a device can, for example, be a fuel cell with which electric energy may be generated.

According to a further aspect the invention relates to a method for generating electric energy, in which use is made of the device according to the invention.

Fuel cells with which electric energy can be generated are known in the art. In such a fuel cell electric energy is generated, for example, by electrochemical combustion of hydrogen ($H_2$) and oxygen ($O_2$), The reactions that may occur herein are the following:

(1) oxidation at the anode:

$$H_2 \rightarrow 2H^+ + 2e^-$$

or

$$H_2 + 2OH^- \rightarrow 2H_2O + 2e\text{-}$$

(2) reduction at the cathode:

$$\tfrac{1}{2}O_2 + 2H^+ + 2e^- \rightarrow H_2O$$

or

$$\tfrac{1}{2}O_2 + H_2O + 2e^- \rightarrow 2OH^-$$

or

The reduction and oxidation reaction occur in two separate compartments. Because the anode and cathode are electrically connected due to these reactions electron transport occurs between the anode and cathode, which thus creates an electric current. The charge balance is maintained because transport of cations is possible via a cation-conducting material, with which the anode compartment and the cathode compartment are separated.

In a fuel cell an anaerobic biological oxidation reaction may also occur at the anode. Such a reaction is catalysed by a biocatalyst, which uses the anode either directly or via a redox mediator as terminal electron acceptor. Examples of such biocatalysts are anodophylic microorganisms and redox enzymes. If the anaerobic oxidation reaction at the anode is performed by a microorganism, reference is also made to a microbial fuel cell.

If $O_2$ is used as terminal electron acceptor, the reactions that occur in a microbial fuel cell may be presented as follows:

$$\text{Anode: } [CH_2O] + H_2O \rightarrow CO_2 + 4H^+ + 4e^- \text{ (oxidation)}$$

$$\text{Cathode: } O_2 + 4H^+ + 4e^- \rightarrow 2H_2O \text{ (reduction)}$$

$$\text{Nett: } [CH_2O] + O_2 \rightarrow CO_2 + H_2O$$

A microbial fuel cell allows combining water purification with electricity generation as the microorganisms may convert different substrates, which are present in waste water.

When generating electric energy with the use of a fuel cell, including a microbial fuel cell, the value of the electric power is of importance. The electric power of a microbial fuel cell is in fact equal to the energy that is elaborated by the chemical energy minus the internal energy loss in the fuel cell. The major loss in a well designed fuel cell is the energy necessary to let the reaction proceed at a given rate. This energy loss is called the overpotential. At an increasing rate and an increasing energy loss a decrease of the electric potential of the fuel cell is thus observed. This relation is presented by the so called V-I curve, which gives the cell potential ($V_{cell}$) as a function of the current (I). Usually this current is expressed per $m^2$ geometric electrode area. As the power density of the cell ($P_{cell}$) equals $V_{cell} \cdot I$ and as $V_{cell}$ has a strong correlation with the current density (I), the power of the cell is also a function of I.

A cathode in general is assembled from two elements, in particular a current distributor and a catalyst, which accelerates the cathode reaction. Carbon is a commonly used current distributor, as it combines a low price, a high electrical conductance and a high chemical resistance.

The power of a microbial fuel cell with a carbon cathode, without catalyst, in general is between 1-20 mW/$m^2$. This is too low for an economic application of a microbial fuel cell.

In general it is accepted that the main energy loss of a microbial fuel cell is caused by the cathode overpotential. A first point of interest in designing a cathode thus is a low overpotential.

A possible solution for this problem is the use of platinum as catalyst. For a microbial fuel cell, which uses waste water, the electric power of a cell with a Pt-cathode is approximately 300 mW/$m^2$. Platinum catalyses the reduction of oxygen to water. However, platinum is a valuable material and the production of platinum can be very polluting. This causes problems for the economic application of a microbial fuel cell which uses platinum. A second point of interest in designing a cathode thus is that the cathode should be produced of a affordable material.

The V-I curve only describes the loss caused by the resistance due to the flow of electrons and ions in the system. A second loss occurs due to the fact that oxygen penetrates trough the proton-conducting material, which forms the separation between the anode and cathode compartment. In general it is accepted that this oxygen in the anode compartment is used for the oxidation of the substrate. This substrate thus is no longer available for the production of electric energy. The efficiency of a microbial fuel cell in relation to this aspect is expressed as the coulomb efficiency. The coulomb efficiency is the fraction of electrons available in the substrate, which eventually end up in the generated electric current. A third point of interest in designing a cathode thus is obtaining a high coulomb efficiency.

A fourth point of interest in designing a cathode is that the cathode should not leak any polluting materials. Materials which are present in the cathode in a microbial fuel cell may leak slowly to the anode compartment via the cation-conducting material, with which the anode and cathode compartments are separated. As the anode in a microbial fuel cell is circulated with waste water, any material leaking from the cathode compartment will be distributed in the environment, unless special measures are taken to prevent this. As a benefit of a microbial fuel cell is that it may be used to produce clean energy, distribution of pollution should be prevented.

The present invention is aimed at providing a cathode system providing improvements relative to platinum cathodes in relation to one or more of the above mentioned points of interest.

In the prior art a number of the problems associated with the use of a platinum cathodes have received attention in the international application WO 2004/015806. Herein a stainless steal cathode of which the surface is coated with a biofilm for catalysing the reaction at the cathode is described. The biofilm is formed by soaking the cathode material in a medium, which may cause the growth of a biofilm, and simultaneously applying a polarisation potential on the cathode. This cathode is also described in the publication "catalyses of oxygen reduction in PEM fuel cell by seawater biofilm" (Electro chemistry communications 7 (2005) 900-904) in the name of Bergel, A. et al..

Rhoads, A. et al. (Environmental Science & Technology, vol. 39, no. 12, 2005) describe a microbial fuel cell, wherein use is made of a carbon cathode colonised by the manganese-oxidising bacterium *Leptotrix discophora*. This manganese-oxidising bacterium catalyses the biological oxidation of manganese to insoluble manganese oxides. These manganese oxides precipitate on the cathode, where they are reduced to $Mn^{2+}$. The $Mn^{2+}$ is subsequently oxidised to the insoluble manganese oxides by *Leptotrix discophora* by using oxygen.

The present invention aims at providing an alternative for the cathode systems disclosed in the prior art, and this is achieved with the device according to claim 1.

In the device according to the invention use is made of the Fe(II)/Fe(III) redox couple to transfer electrons from the cathode to the terminal electron acceptor. During this Fe(III) is reduced to Fe(II) at the cathode. The electrons necessary for this, can be transported to the cathode in an electric system. This may for example be possible by electrically connecting the cathode to an anode, where an oxidation reaction occurs. The electron transfer from Fe(II) to the terminal electron acceptor is catalysed by a Fe(II) oxidising catalyst. By reduction of Fe(III) to Fe(II) at the cathode and subsequent oxidation of Fe(II) to Fe(III) a cathode system is obtained, which differs from the systems described in the prior art, and which circumvents one or more of the disadvantages associated with platinum cathodes.

The device according to the invention comprises a number of anode compartments provided with an anode, placed in an anode fluidum, and a number of cathode compartments separated from the anode compartments provided with a cathode, placed in a cathode fluidum. Thus, the anode compartment and cathode compartment are suitable for holding the anode fluidum and cathode fluidum. The term fluidum within the present invention comprises a medium, wherein molecules with a low molecular weight (MW<300) can undergo free diffusion motion, including a gel. The fluidum preferably comprises an aqueous medium, inclusive a aqueous gel.

The parts of the anode and cathode are manufactured from suitable materials. Selection of suitable materials for the parts, such as current distributors for the anode and cathode, are within the ambit of the knowledge of the skilled person. The current distributor may for example be selected from carbon or a different conducting material. The use of carbon has special preference due to the excellent electric conduction, the price and chemical inertion of this material.

The anode fluidum comprises reagents for an oxidation reaction, preferably an anaerobic oxidation reaction, more preferably an anaerobic biological oxidation reaction. In general these reagents comprise an oxidisable compound, such as an organic oxidisable compound.

It is further preferred that a catalyst is present in the anode compartment, which catalyses the oxidation of the oxidisable compound and/or the transfer of electrons, elaborated in the oxidation reaction, to the anode. Such a catalyst may comprise platinum. However, the use of platinum is not preferred because of the above-mentioned problems associated with the use of this catalyst. It is more preferred to use a biological catalyst. Suitable biocatalysts comprise for example microorganisms, which may use the anode either directly or via a redox mediator as a terminal electron acceptor. Examples of microorganisms which may use the anode as terminal electron acceptor, are anodophylic microorganisms, such as one or more organisms selected from the group of *Geobacter sufferreducens, Geobacter*, *metallireducens, Shewanella putretacients, Rhodoferax ferireducens*.

In order to obtain a high coulomb efficiency it is furthermore preferred to maintain the concentration of the terminal electron acceptor, for example oxygen, in the anode compartment as low as possible.

In order to let the reduction of Fe(III) to Fe(II) proceed adequately at the cathode, the cathode potential must have a suitable value. This may be between 500-800mV (relative to the standard hydrogen electrode).

Depending on the pH Fe(II) and Fe(III) form oxides/hydroxides with a low solubility. Comparable to the system described in the above-mentioned publication of Rhodes, A. et al., Fe(II) oxides/hydroxides and/or Fe(III) oxides/hydroxides may therefore precipitate on the cathode. The Fe(III) oxides/hydroxides may be reduced at the cathode to iron forms which may be oxidised by the Fe(II)-oxidising catalyst.

If Fe(II) and/or Fe(III) are present in an substantial amount as Fe(II) oxides/hydroxides and/or Fe(III) oxides/hydroxides, it is preferred that the Fe(II)-oxidising biocatalyst is present in the proximity of the cathode surface, and more preferably is present on the cathode surface.

According to a preferred embodiment of the invention, it is however preferred that Fe(II) and Fe(III) are substantially present in soluble form in the cathode fluidum, meaning in the form of ions which may be complexed or not. This is for example possible by selecting the pH of the cathode fluidum, such that the formation of Fe(II) and Fe(III) oxides/hydroxides is prevented. In general low pH values are suitable for this. Therefore, the invention according to a preferred embodiment, provides a device wherein the cathode fluidum has a pH value of 0-5, preferable of 0-3, more preferably of 2-3.

The total concentration of dissolved iron species (Fe(III) ions and Fe(II) ions) according to a preferred embodiment of the invention is within the range of 0.05-0.2 M, more preferably 0.01-0.1 M, such as 0.05-0.1 M. Fe(IT) and Fe(III) may be introduced in the system in the form of soluble salts, such as $FeCl_2$, $FeCl_3$, $Fe_2(SO_4)$, $Fe_3(SO_4)_2$, or combinations thereof.

In the device according to the invention use may be made of any suitable terminal electron acceptor. Because of the excellent availability and the degree of compatibility with biological redox catalysts, it is most preferable if the terminal electron acceptor is oxygen.

The Fe(II) oxidising catalyst may be any arbitrary catalyst, which is capable of efficiently converting Fe(II) to Fe(III), and transferring the elaborated electrons to the terminal electron acceptor. This also includes biocatalysts, which oxidise Fe(II) to Fe(III). The term biocatalyst comprises both parts of organisms, such as enzymes, as well as complete organisms. A Fe(II)-oxidising organism may be selected from Fe(II)-oxidising microorganisms, such as *Acidithiobacillus ferrooxidans* or *Leptospririllum ferrooxidans* of *Gallionella ferruginea*, or organisms from the genus *sulfolobus*. It is however possible to select different Fe(II)-oxidising microorganisms, such as from the genus *chlorobium*.

The Fe(II)-oxidising catalyst may be present free in solution, or alternatively may be immobilised on a suitable carrier. When the Fe(II)-oxidising catalyst is present in an immobilised carrier, it is preferred that the Fe(II) and Fe(II) are present in soluble form in the cathode fluidum. The immobilisation carrier for the Fe(II)-oxidising catalyst permits penetration of Fe(III) and Fe(II) sufficiently.

According to a further preferred embodiment of the device according to the invention the cathode fluidum comprises reagents necessary for the catalysis of the Fe(II) catalyst, such as nutrients for a Fe(II) oxidising organism.

This ensures the activity of the Fe(II)-oxidising catalyst. The selection of suitable reagents, such as nutrients suitable for a Fe(II)-oxidising organism, will depend on the selected catalyst and choice of the reagents and may be made by the skilled person on the basis of his knowledge of the catalyst.

It is known for example that Fe(II) oxidising microorganisms may be chemolitho-autotrophic or phototrophic. Chemolitho-autotrophic Fe(II) oxidising microorganisms obtain their energy from the oxidation from Fe(II). In order to accommodate their full nutritional needs, apart from Fe(II), they require oxygen as a terminal electron acceptor, $CO_2$ as a carbon source and water and essential minerals to accommodate their further element needs. Phototrophic organisms also require light of a suitable wavelength.

In het device according to the invention the anode compartment and cathode compartment are separated from each other. This separation is present to prevent exchange of the reagents in the anode compartments and cathode compartments, if this is not desired. In general the reagents of the oxidation reaction in the anode compartment disturb the reduction reaction in the cathode compartment and visa versa. It is for example undesirable that oxygen (or a different terminal electron acceptor) ends up in the anode compartment. This has detrimental effects on the coulomb efficiency. For a good performance of a fuel cell it is however necessary that there is nett transport of electrons and protons form the anode compartment to the cathode compartment.

The electron transport takes place by electrically connecting the anode and cathode. In order to facilitate the transport of protons and to minimize the further exchange of reagents, special measures should be taken for an efficient performance of a fuel cell. Such measures may be taken by separating the anode compartment and cathode compartment by means of a proton conducting material, which is known to the skilled person. Examples of proton conducting materials are for example cation selective membranes, such as Nafion®.

It is however possible that protons flow back through a cation selective membrane from the cathode compartment to the anode compartment. This is especially the case when a low pH is maintained in the cathode compartment, for example to decrease the chance of formation of Fe(II) and/or Fe(III) oxides/hydroxides. This may have negative effects for the anode reaction, especially in a microbial fuel cell, because of a pH decrease in the anode compartment.

In order to prevent a proton flow from the cathode to the anode, the inventors of the present invention have now found that an anion exchange membrane may also suitably be used as separation between the anode compartments and cathode compartments. Although it may not at first sight seem logical to use an anion exchange membrane to allow protons (cations) to pass, it has turned out that such a membrane may, under certain circumstances, allow nett transport of protons.

It appears that under influence of the membrane potential water fission may take place in an anion exchange membrane, wherein water molecules are split in hydroxide anions and protons. Under influence of this membrane potential negatively charged groups will be pulled to the anode and positively charged groups will be pulled to the cathode. This membrane potential is the result of the displacement of electrons from the anode to the cathode, whereby the anode receives a positive potential and the cathode receives a negative potential. The water fission may result in a nett proton transport to the cathode compartment, because due to the membrane potential hydroxide anions are displaced in the direction of the anode compartment and protons in the direction of the cathode compartment.

It should be noted that an anion exchange membrane allows other negatively charged ions to move from the cathode compartment to the anode compartment. In order to prevent this, it is preferred, when an anion exchange membrane is used, that the negatively charged ions in the cathode compartment have such qualities that they pass difficultly through the anion exchange membrane. This is for example possible by making use of anions with such dimensions, that they pass difficultly through the anion exchange membrane. Examples of such anions are citric acid and sulfonated PEEK (polyetheretherketone) monomers. Furthermore, use may be made of molecules, which contain, apart from anionic functions, also cationic functions (zwitterions).

Alternatively the separation between the anode compartment and cathode compartment may be formed by a bipolar membrane. A bipolar membrane is a membrane having both a anion exchange part and a cation exchange part, as such a bipolar membrane comprises an anion exchange membrane and a cation exchange membrane. By placing such a bipolar membrane such that the anion exchange membrane abuts on the anode compartment and the cation exchange membrane abuts on the cathode compartment, it is also prevented that cations may move from the anode compartment to the cathode compartment, and anions may move from the cathode compartment to the anode compartment. Exception to this are protons. Due to water fission in the bipolar membrane, nett transport of protons from the anode compartment to the cathode compartment still takes place.

According to a preferred embodiment of the device according to the invention, the cathode compartment and anode compartment are therefore separated by a number of ion selective membranes. These ion selective membranes may comprise anion exchange membranes, cation exchange membranes or bipolar membranes. It is furthermore preferred that the number of ion selective membranes comprise a number of anion exchange membranes. Examples of anion exchange membranes are Aciplex A201 (Asahi Chemical Industry Co., Japan), Selemion ASV (Asahi Glass Co. Ltd, Japan), FAS (Fuma-tech, GMBH, Germany), AR204szra (Ionics, Inc, United States of America), Neosepta AM-1 (Tokuyama Co., Japan).

According to a further preferred embodiment, the number of ion selective membranes comprise on the side of the anode compartment a anion exchange membrane. More preferably the anion exchange membrane is part of a bipolar membrane, formed from a number of anion exchange membranes and a number of cation exchange membranes. The use of a cation exchange membrane is possible in certain embodiments of the invention. The use of a cation exchange membrane is preferred when this forms part of a bipolar membrane. Examples of bipolar membranes are Fuma-tech FT-FBI (Fuma-Tech, GMBH, Germany), Neosepta BP-1 (Tokuyama Co., Japan).

The anode fluidum and cathode fluidum may be in the form of a free flowing fluidum, such as a gas or a free flowing fluid, or may be in the form of an immobilized fluid, such as a gel. In general the use of a free flowing fluidum is preferred. However, in certain embodiments the use of a gel may be of benefit.

In one embodiment of the device according to the invention the cathode fluidum may for example be applied as a gel layer on the separation between the anode compartment and cathode compartment. In this gel layer apart from the cathode also the terminal electron acceptor, the redox mediator (the Fe(II)/Fe(III) redox couple), the Fe(II) oxidising catalyst and possible other required reagents are present.

The thickness of the gel layer and the cathode together is such, that the supply of the terminal electron acceptor may take place by means of diffusion from the surface of the gel layer. The cathode in this embodiment preferably is formed, such that the cathode surface is as large as possible, having a diffusion distance to a certain volume element of the gel as small as possible, and minimal diffusion limitation of the terminal electron acceptor from the gel surface. A honeycomb structure for example is suitable to be used as cathode in this embodiment of the device.

The benefit of the above mentioned embodiment of the device according to the invention may be that aeration of a free flowing fluid in order to introduce oxygen as a terminal electron acceptor is not required. To introduce oxygen it is simply sufficient to pass an oxygen containing gas flow along the gel surface. Elimination of the necessity for aeration of a free flowing fluid results in an energy saving. Apart from this, in this embodiment the concentration of the terminal electron acceptor in the proximity of the separation between the anode compartment and cathode compartment may be maintained low. This may result in an improvement of the coulomb efficiency.

In the device according to the invention the cathode compartment may be separated in an iron reduction compartment, wherein Fe(III) is reduced at the cathode and an iron oxidation compartment, wherein Fe(II) is oxidised while supplying the terminal electron acceptor. In such an embodiment furthermore means for transferring the cathode fluidum at least partially from the iron reduction compartment to the iron oxidation compartment and vice versa are present. Due to this the reduction of Fe(III) to Fe(II) and the oxidation of Fe(II) to Fe(III) may take place in separate compartments. This has the advantage that the concentration of the terminal electron acceptor in the proximity of the ion selective membrane, used as separation, may be limited. This decreases the chance that the terminal electron acceptor ends up in the anode compartment, because the ion selective membranes to a certain extent also allow oxygen and other uncharged molecules to pass. Penetration of oxygen in the cathode compartment has a negative effect on the coulomb efficiency of a fuel cell.

The means for transferring the cathode fluidum from the iron reduction compartment to the iron oxidation compartment and vice versa, may be any means suitable for transferring a fluid, such a regular piping and pumping systems, if the fluidum is a free flowing fluidum.

In a further preferred embodiment the device according to the invention comprises additionally a terminal electron acceptor removing compartment, wherein means are present for removing the terminal electron acceptor. In this embodiment the means for transferring the cathode fluidum at least partially from the iron oxidation compartment to the iron reduction compartment are suitable for transferring the cathode fluidum at least partially from the iron oxidation compartment to the terminal electron acceptor removing compartment and from there to the iron reduction compartment. Due to the further compartmentalisation of the cathode compartment by the introduction of the terminal electron acceptor removing compartment, the possibilities for removing the terminal electron acceptor in the proximity of the ion selective membrane used as separation is increased further. The means for removing the terminal electron acceptor may comprise a reductor for the terminal electron acceptor, such as Fe(II). Fe(II) is present sufficiently in the iron reduction.compartment. Therefore, the simple transfer of part of the cathode fluidum from the iron reduction compartment to the terminal electron acceptor removing compartment is sufficient for introducing the means for the separation of the terminal electron acceptor in the terminal electron acceptor removing compartment. Therefore, the invention in a further preferred embodiment provides a device according to the invention, wherein means are present to transfer the cathode fluidum partially form the iron reduction compartment to the terminal electron acceptor removing compartment. It is furthermore especially preferred that also the Fe(II) oxidising catalyst is present in the terminal electron acceptor removing compartment.

It is clear that in both the iron oxidation compartment and in the terminal electron acceptor removing compartment the electron acceptor is consumed. As such, the chemical reactions taking place in these compartments may be identical. An important difference however, is that the reaction in the iron oxidation compartment is aimed at the oxidation of Fe(II) to Fe(III), and the reaction in the terminal electron acceptor removing compartment is aimed at removing the terminal electron acceptor. As such, the reaction in the iron oxidation compartment preferably is performed such that Fe(II) is limiting, such that a

(essentially) complete conversion of Fe(II) is obtained. In contrast to this the reaction in the terminal electron acceptor removing compartment is such that the terminal electron acceptor is limiting, such that a (essentially) complete removal of the terminal electron acceptor takes place.

According to a further aspect the invention relates to a method for producing electric energy, wherein use is made of the device according to the invention. This method comprises the following steps:

(i) providing a device according to the invention;
(ii) electrically connecting the anode and the cathode;

(iii) forming and/or maintaining anaerobic conditions in the anode compartment;

(iv) performing an anaerobic oxidation reaction, preferably a biological oxidation reaction in the anode compartment;

(v) reducing Fe(III) to Fe(II) at the cathode and oxidising Fe(II) while reducing a terminal electron acceptor.

In order to guarantee the functioning of the device and/or to allow a continuous process, one or more used substances, such as the reagents for the anaerobia oxidation reaction, the terminal electron acceptor and the optional nutrients for the Fe(II) oxidising organisms may be replenished sufficiently. Furthermore, reaction products formed may be removed.

As already mentioned above, in the device according to the invention the cathode compartment may be separated in an iron reduction compartment, wherein iron (III) is reduced at the cathode and an iron oxidation compartment, wherein Fe(II) is oxidised while providing a terminal electron acceptor. If such a device is used in the method according to the invention, the cathode fluidum is transferred at least partially from the iron reduction compartment to the iron oxidation compartment, and from the iron oxidation compartment to the iron reduction compartment, for example by means of pumping in a circular flow.

If the device according to the invention furthermore comprises a terminal electron acceptor removing compartment, wherein means are present for eliminating the terminal electron acceptor, the at least partial transfer of the cathode fluidum from the iron oxidation compartment to the iron reduction compartment takes place by transferring the cathode fluidum at least partially from the iron oxidation compartment to the terminal electron acceptor removing compartment, and from there at least partially transferring it to the iron reduction compartment.

In a further preferred embodiment of the method according to the invention a part of the cathode fluidum is transferred from the iron reduction compartment to the terminal electron acceptor removing compartment. This is a simple means to introduce Fe(II), which may function as a means for removing the terminal electron acceptor, in the terminal electron acceptor removing compartment.

The invention is further described with reference to the following figures, which are solely meant for illustration, and which are not intended to limit the scope of the invention as defined in the claims.

Figure 1 shows a schematic overview of a microbial fuel cell;

Figure 2 shows a schematic overview of the cathode compartment of the device according to the invention;

Figure 3 shows a schematic overview of a special preferred embodiment of the cathode compartment of the device according to the invention, wherein the reduction of Fe(III) and the oxidation of Fe(II) takes place in separate compartment;

Figure 4 shows V-I curves for the cell potential and the cathode potential of the device according to the invention; and

Figure 5 shows the correlation between the power density and current density of the device according to the invention.

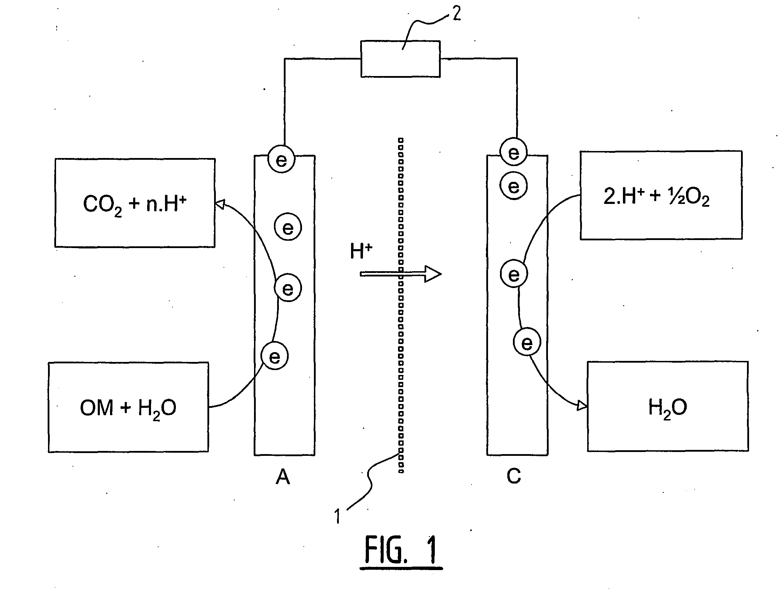

Figure 1 schematically shows how at the anode A of a microbial fuel cell organic matter OM together with water is oxidised anaerobically to $CO_2$ and protons. The electrons, elaborated herein, are transferred to the anode A and flow to the cathode C via an electric system 2. At the cathode C the electrons are used for the reduction of oxygen together with protons to water. The charge balance in the system is maintained because protons may flow through the membrane 1 from the anode compartment to the cathode compartment. Due to the electron flow from the anode to the cathode, electric work may be performed in the electric system 2.

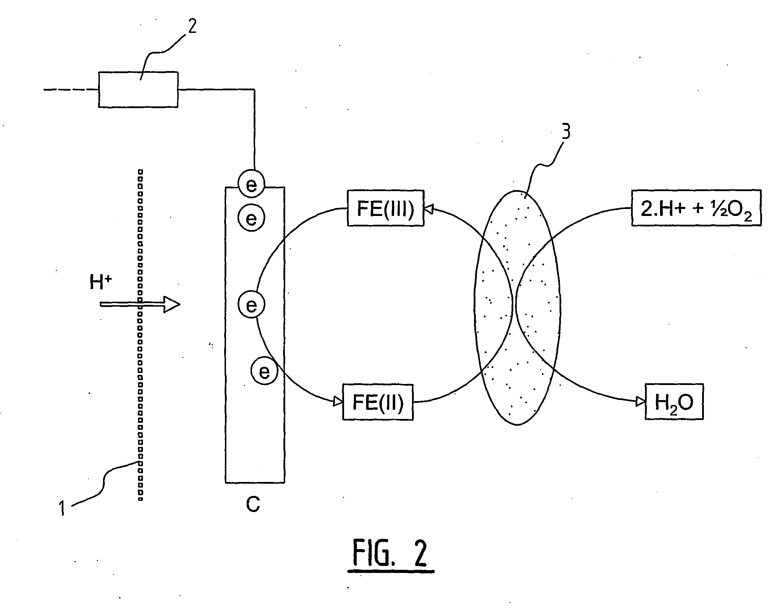

Figure 2 shows a schematic presentation of the cathode compartment of the device according to the invention. In contrast to the known microbial fuel cells, reduction of oxygen together with protons to water does not take place directly at the cathode C. Instead, at the cathode Fe(III) is reduced to Fe(II). The Fe(II) is subsequently oxidised to Fe (III), under the influence of a catalyst 3, for example a Fe(II) oxidising bacterium, herein the electrons are used for the reduction of oxygen, together with protons to water.

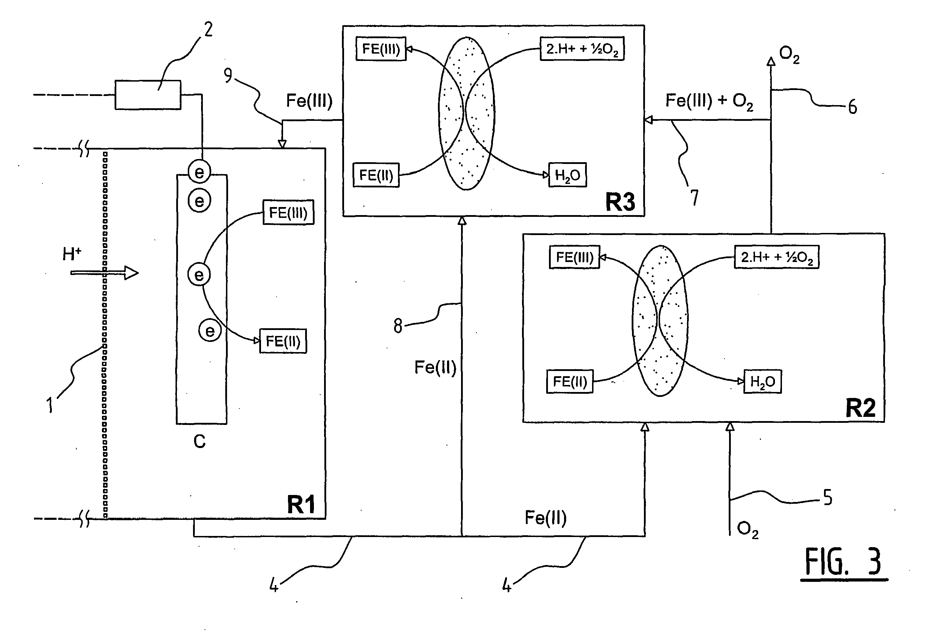

Figure 3 schematically shows the cathode compartment of a preferred embodiment of the device according to the invention. In this embodiment the cathode compartment is separated in a iron reduction compartment R1, an iron oxidation compartment (R2) and a terminal electron acceptor removing compartment R3. In the iron reduction compartment Fe(III) is reduced to Fe(II) at the cathode C. The Fe(II) in this embodiment is pumped via piping 4 to the iron oxidation compartment R2, where Fe(II) under influence of a catalyst 3, here a Fe(II) oxidising bacterium, is oxidised to Fe(III). The electrons elaborated herein are used for the reduction of oxygen together with protons to water. The oxygen required for this is supplied to the iron oxidation compartment R2 via an aeration duct 5. Via a degassing duct 6 undissolved gasses may escape.

The effluent of the iron oxidation compartment may be pumped back directly to the iron reduction compartment R1. In the embodiment of the device according to the invention shown in figure 3 however, the effluent of the iron oxidation compartment R2 is first pumped via duct 7 to a terminal electron acceptor removing compartment, where the oxygen content (the terminal electron acceptor) is decreased. This is achieved in the embodiment shown by supply of Fe(II) to the terminal electron acceptor removing compartment R3. This supply takes place via a duct 8, which is a branch of the duct 4. Due to the supply of Fe(II) to the terminal electron acceptor removing compartment R3, without further supply of oxygen, residual oxygen in the terminal electron acceptor removing compartment R3 is used. In order to achieve this, the reaction in the terminal electron acceptor removing compartment R3 is preferably performed such that oxygen is the limiting substrate. This has the advantage that the back flow 9 from the terminal electron acceptor removing compartment R3 contains a low level of the terminal electron acceptor (here oxygen). This decreases the chance that the terminal electron acceptor penetrates to the anode compartment via the membrane 1. This penetration of oxygen (the terminal electron acceptor) in the anode compartment has negative effects on the coulomb efficiency of the microbial fuel cell.

Although in the embodiment, as shown in figure 3, the contact with the anode compartment via the membrane 1 is present in the iron reduction compartment R1, it is also possible to let this contact take place via the membrane material via the terminal electron acceptor removing compartment R3.

Example I

A flat microbial fuel cell was assembled from 6 plates having a size of 28.0 x 28.0 x 1.2/1.5 cm, which were screwed together. The four middle plates comprised channels. The bipolar membrane (fumasep®, FuMA-tech GfmbH, St. Ingbert, Germany) was placed between the two middle plates. Cathode and anode both had a channel volume of 0.675 1. The electrodes were formed from graphite felt having a size of 21.9 cm x 21.9 cm (thickness: 3 mm - FMI Composites Ltd., Galashiels, Scotland), having a total area of 480 $cm^2$ and an effective area of the reactor volume divided by the channel depth: 675/2.7 = 250 $cm^2$.

The cathode and anode electrodes were guided from the reactor with a gold wire and were connected to each other via a automated regulating unit, which regulated the resistance or the voltage.

The reference electrodes were Ag/AgCl, 3 M KCl electrodes (ProSense Qis, Oosterhout, The Netherlands). The cathode solution was continuously circulated via an open bottle for oxygen supply with a flow of 12 1 $h^{-1}$. The anode solution was recirculated with a flow of 10 1 $h^{-1}$ via a settler to prevent loss of microorganisms. Both the anode potential and cathode potential and pH were monitored constantly, as well as the cathode conductivity, oxygen concentration and temperature. Data were collected with a field point FP-AI-110 module, and a self written programm in LabVIEW, obtained from National Instruments.

The anode compartment was inoculated with effluent from a different working microbial biofuel cell. The continuous feed of the anode compartment consisted of a calcium acetate solution supplied with a flow of 250 ml/d (HRT = 4 days), having a varying acetate concentration on the basis of the expected current. Every 4 dayg 5 ml of the macro nutrient solution (consisting of 4.31 g/l $NH_4Cl$, 5.39 g/l $CaCl_2.2H_2O$, 4.31 g/l $MgSO_4.7H_2O$ en 54 mg/l $FeCl_3$) and 10 ml of a 2 M potassium phosphate buffer at pH = 7 of pH = 6 was added to the anode compartment.

Several compositions of the cathode solution were tested. In particular: (1) water buffered at pH = 8, having 20% oxygen saturation; (2) water buffered at pH = 2.5, having 100% oxygen saturation; (3) an aqueous solution of $Fe_2(SO_4)_3$, buffered at pH = 2.5; (4) an aqueous solution of $FeCl_3$, buffered at pH = 2.5.

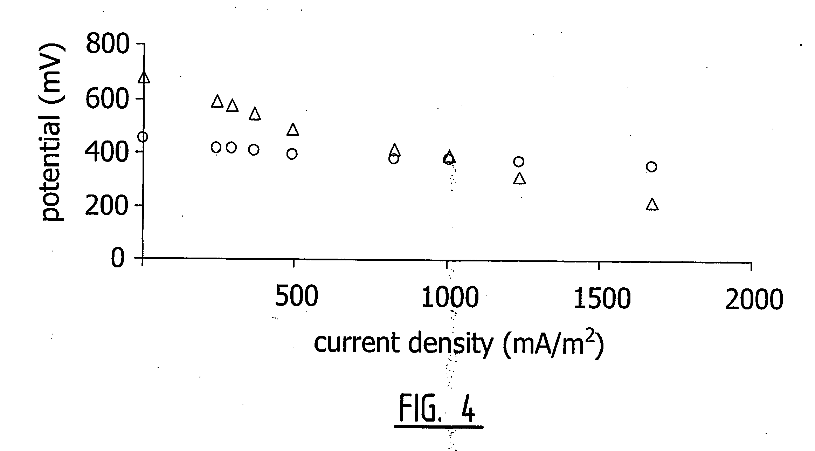

Figure 4 shows the relation between the cell potential (triangles) and the cathode potential (circles) as a function of the current density, as measured in the above mentioned system, wherein the anode compartment was buffered at pH = 7 and $Fe_2(SO_4)_3$ was used at the cathode.

In figure 4 it is shown that the cell potential decreases faster than the cathode potential, which thus shows that the cathode potential is not limiting for the fuel cell, using the system according to the invention at the cathode.

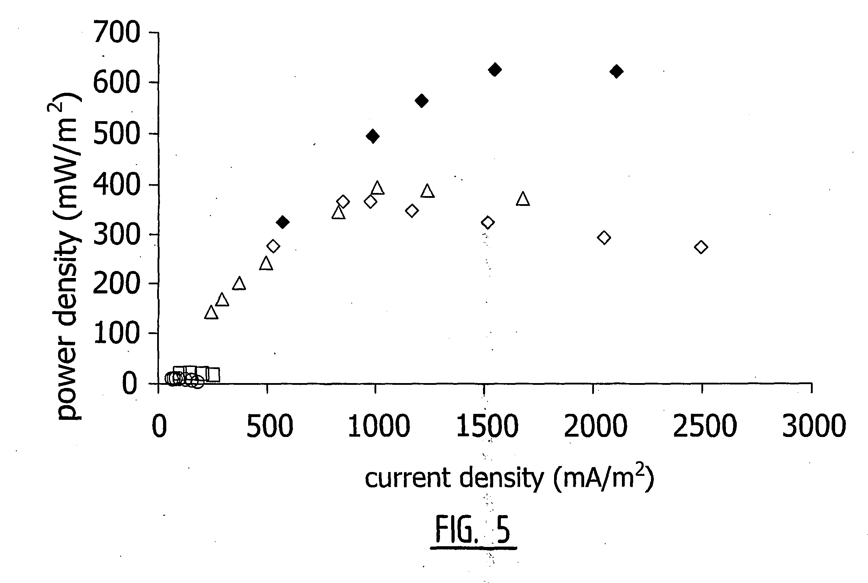

Figure 5 shows the correlation between the power density as a function of the current density in a number of fuel cells. The power density is shown for the following cathode systems (1) water buffered at pH = 8, having 20% oxygen saturation (circles); (2) water buffered at pH = 2.5, having 100% oxygen saturation (squares); (3) an aqueous solution of $Fe_2(SO_4)_3$, buffered at pH = 2.5 open diamonds for anode pH = 7, closed diamonds for anode pH = 6); (4) an aqueous solution of $FeCl_3$, buffered at pH = 2.5 (triangles).

The measured maximal power density is comparable to the present systems using a platinum cathode.

Example II

*Acidithiobacillus ferrooxidans* was cultured in a medium with the following composition: 0.4 g/l $KH_2PO_4$, 0.4 g/l $MgSO_4$ x 7 $H_2O$, 0.4 g/l $(NH_4)_2SO_4$, 33.3 g/l $FeSO_4$ x 7 $H_2O$, 0.1 N $H_2SO_4$, pH = 2.5. The growth took place in a batch reactor with constant aeration. The Fe(III) and Fe(II) concentration was determined at the beginning of the culture and during the incubation with the Hach Lange test (LCK 320). After $Fe^{2+}$ was fully converted to $Fe^{3+}$, the cathode compartment of a microbial fuel cell, as described in example 1 (pH = 6 for anode compartment), was loaded with this culture medium. Such a fuel cell could be operated with only 15% decrease of the $Fe^{3+}$ present. Without the presence of *Acidithiobacillus ferrooxidans* a comparable amount of $Fe^{3+}$ was fully converted at the cathode after 4 days. As such *Acidithiobacillus ferrooxidans* regenerates $Fe^{3+}$ in the cathode.

**Claims**

1. Device comprising:

    (i) a number of anode compartments provided with an anode (A), placed in an anode fluidum comprising reagents for an oxidation reaction, preferably an anaerobic oxidation reaction, more preferably an anaerobic biological oxidation reaction;

    (ii) a number of cathode compartments separated from the anode compartments, provide with a cathode (C), placed in a cathode fluidum comprising a terminal electron acceptor, a redox mediator, suitable for transferring electrons from the cathode (C) to the terminal electron acceptor, and a catalyst (3), catalysing the electron transfer from the redox mediator to the terminal electron acceptor, wherein the redox mediator comprises the Fe(II)/Fe(III) redox couple and the catalyst comprises Fe(II) oxidising catalyst; **characterized in that** the cathode compartments and anode compartments are separated by a number of ion selective membranes (1), wherein the number of ion selective membranes (1) comprise an anion exchange membrane.

2. Device according to claim 1, wherein Fe(II) and Fe(III) are substantially present in the cathode fluidum in soluble form, and wherein the concentration Fe(III) ions and Fe(II) ions in soluble form preferably is within the range of 0.05-0.2 M, and more preferably 0.01-0.1 M, such as 0.05-0.1 M.

3. Device according to claims 1-2, wherein the cathode fluidum has a pH value of 0-5, preferably of 0-3, more preferably of 2-3.

4. Device according to claims 1-3, wherein the terminal electron acceptor is oxygen.

5. Device, according to claims 1-4, wherein the Fe(II) oxidising catalyst (3) comprises a Fe (II) oxidising biocatalyst, such as a Fe(II) oxidising organism, for example a Fe(II) oxidising microorganism, such as *Acidithiobacillus ferrooxidans, Leptospirillum ferrooxidans* or *Gallionella ferruginea*, or a microorganism from the genus *solfolobus* or the genus *chlorobium.*

6. device according to claims 1-5, wherein the cathode fluidum comprises reagents for the catalysis of the Fe(I) oxidising catalyst, such as nutrients for a Fe(II) oxidising organism.

7. Device according to claims 1-6, wherein the number of ion selective membranes (1) comprise an anion exchange membrane on the side of the anode compartment, preferably as a part of a bipolar membrane.

8. Device according to claims 1-7, wherein the cathode compartment is separated in an iron reduction compartment (R1), wherein Fe(III) is reduced at the cathode (C) and an iron oxidation compartment (R2), wherein Fe(II) is oxidised under supply of a terminal electron acceptor, and furthermore means are present to transfer the cathode fluidum at least partially from the iron reduction compartment to the iron oxidation compartment and vice versa.

9. Device according to claim 8, further comprising a terminal electron acceptor removing compartment (R3), wherein means are present to remove the terminal electron acceptor, and wherein the means to transfer the cathode fluidum at least partially from the iron oxidation compartment (R2) to the iron reduction compartment (R1) are suitable to transfer the cathode fluidum at least partially from the iron oxidation compartment (R2) to the terminal electron acceptor removing compartment (R3), and to transfer it from there at least partially to the iron reduction compartment (R1).

10. Device according to claim 9, wherein the means for removing the terminal electron acceptor comprise a reductor for the terminal electron acceptor, such as Fe(II) and/or wherein means are present to transfer the cathode fluidum at least partially from the iron reduction compartment (R1) to the terminal electron acceptor removing compartment (R3).

11. Method for generating electric energy comprising the steps of:

    (i) providing a device according to one of the claims 1-12;
    (ii) electrically connecting the anode (A) and the cathode (C) ;
    (iii) forming and/or maintaining anaerobic conditions in the anode compartment;
    (iv) performing an anaerobic oxidation reaction, preferably a biological oxidation reaction in the anode compartment;

(v) reducing Fe(III) to Fe(II) at the cathode (C) and oxidising Fe(II) while reducing a terminal electron acceptor.

12. Method according to claim 11, wherein one or more substances used, such as reagents for the anaerobic oxidation reaction, the terminal electron acceptor or the optional nutrients for the Fe(II) oxidising organism are replenished sufficiently.

13. Method according to claims 11-12, wherein the cathode compartment of the device is separated in an iron reduction compartment (R1), wherein iron (III) is reduced at the cathode (C) and an iron oxidation compartment (R2), wherein Fe (II) is oxidised under supply of a terminal electron acceptor, and the cathode fluidum is transferred at least partially from the iron reduction compartment (R1) to the from oxidation compartment (R2), and from the iron oxidation compartment (R2) to the iron reduction compartment (R1), preferably by means of pumping in a circular flow.

14. Method according to claim 13, wherein the device further comprises a terminal electron acceptor removing compartment (R3), wherein means are present to remove the terminal electron acceptor, and wherein the at least partial transfer of the cathode fluidum from the iron oxidation compartment (R2) to the iron reduction compartment (R1) takes place by at least partially transferring the cathode fluidum from the iron oxidation compartment (R2) to the terminal electron acceptor removing compartment (R3), and from there transferring it at least partially to the iron reduction compartment (R1).

15. Method according to claim 14, wherein part of the cathode fluidum is transferred from the iron reduction compartment (R1) to the terminal electron acceptor removing compartment (R3).

**Patentansprüche**

1. Vorrichtung mit

(i) einer Anzahl an Anodenabteilungen, die mit einer Anode (A) versehen sind, welche in einem Anodenfluid platziert ist, das Reagenzien für eine Oxidationsreaktion und vorzugsweise für eine anaerobe Oxidationsreaktion und weiter bevorzugt für eine anaerobe biologische Oxidationsreaktion aufweist;
(ii) einer Anzahl an Kathodenabteilungen, die von den Anodenabteilungen getrennt und mit einer Kathode (C) versehen sind, die in einem Kathodenfluid platziert ist, das einen Terminalelektronenakzeptor, einen Redoxbeschleuniger, der zum Übertragen von Elektronen von der Kathode (C) zu dem Terminalelektronenakzeptor geeignet ist, und einen Katlysator (3) aufweist, der die Elektronenübertragung von dem Redoxbeschleuniger zu dem Terminalelektronenakzeptor katalysiert, wobei der Redoxbeschleuniger das Fe(II)/Fe(III)-Redoxpaar aufweist und der Katalysator einen Fe(II)-Oxidierkatalysator aufweist, **dadurch gekennzeichnet, dass** die Kathodenabteilungen und die Anodenabteilungen durch eine Anzahl an Ionenselektivmembranen (1) getrennt sind, wobei die Anzahl der Ionenselektivmembranen (1) eine Anionenaustauschmembran aufweisen.

2. Vorrichtung gemäß Anspruch 1, wobei das Fe(II) und das Fe(III) im Wesentlichen in dem Kathodenfluid in einer löslichen Form vorhanden sind, und wobei die Konzentration der Fe(III)-Ionen und der Fe(II)-Ionen in der löslichen Form vorzugsweise in dem Bereich von 0,05 - 0,2 M und weiter bevorzugt von 0,01 - 0,1 M wie zum Beispiel 0,05 - 0,1 M ist.

3. Vorrichtung gemäß Ansprüchen 1 - 2, wobei das Kathodenfluid einen pH-Wert von 0 - 5, vorzugsweise von 0 - 3 und weiter bevorzugt von 2 - 3 hat.

4. Vorrichtung gemäß Ansprüchen 1 - 3, wobei der Terminalelektronenakzeptor Sauerstoff ist.

5. Vorrichtung gemäß Ansprüchen 1 - 4, wobei der Fe(II)-Oxidierkatalysator (3) einen Fe(II)-Oxidierbiokatalysator, wie zum Beispiel einen Fe(II)-Oxidierorganismus aufweist, zum Beispiel einen Fe(II)-Oxidiermikroorganismus, wie zum Beispiel Acidithiobacillus ferrooxidans, Leptospirillum ferrooxidans oder Gallionella ferruginea, oder einen Mikroorganismus der Gattung Solfolobus oder der Gattung Chlorobium.

6. Vorrichtung gemäß Ansprüchen 1 - 5, wobei das Kathodenfluid Reagenzien für die Katalyse des Fe(I)-Oxidierkatalysators aufweist, wie zum Beispiel Nährstoffe für einen Fe(II)-Oxidierorganismus.

**7.** Vorrichtung gemäß Ansprüchen 1 - 6, wobei die Anzahl der Ionenselektivmembranen (1) eine Anionenaustauschmembran an der Seite des Anodenabteils aufweist, vorzugsweise als einen Teil einer bipolaren Membran.

**8.** Vorrichtung gemäß Ansprüchen 1 - 7, wobei das Kathodenabteil in ein Eisenreduktionsabteil (R1), wobei Fe(III) an der Kathode (C) reduziert wird, und in ein Eisenoxidationsabteile (R2) getrennt ist, wobei Fe(II) durch Zufuhr eines Terminalelektronenakzeptors oxidiert wird, und darüber hinaus Mittel zum Übertragen des Kathodenfluids zumindest teilweise von dem Eisenreduktionsabteil zu dem Eisenoxidationsabteil und umgekehrt vorhanden sind.

**9.** Vorrichtung gemäß Anspruch 8, des Weiteren mit einem Abteil (R3) zum Beseitigen des Terminalelektronenakzeptors, wobei Mittel zum Beseitigen des Terminalelektronenakzeptors vorhanden sind, und wobei die Mittel geeignet sind, das Kathodenfluid zumindest teilweise von dem Eisenoxidationsabteil (R2) zu dem Eisenreduktionsabteil (R1) zu übertragen, das Kathodenfluid zumindest teilweise von dem Eisenoxidationsabteil (R2) zu dem Abteil (R3) zum Beseitigen des Terminalelektronenakzeptors zu übertragen, und diese von dort zumindest teilweise zu dem Eisenreduktionsabteil (R1) zu übertragen.

**10.** Vorrichtung gemäß Anspruch 9, wobei die Mittel zum Beseitigen des Terminalelektronenakzeptors einen Reduktor für den Terminalelektronenakzeptor wie zum Beispiel Fe(II) aufweist, und/oder wobei Mittel zum Übertragen des Kathodenfluids zumindest teilweise von dem Eisenreduktionsabteil (R1) zu dem Abteil (R3) zum Beseitigen des Terminalelektronenakzeptors vorhanden sind.

**11.** Verfahren zum Erzeugen von elektrischer Energie, mit den folgenden Schritten:

(i) Vorsehen einer Vorrichtung gemäß einem der Ansprüche 1 - 12;
(ii) Elektrisches Verbinden der Anode (A) und der Kathode (C) ;
(iii) Ausbilden und/oder Aufrechterhalten von anaeroben Zuständen in dem Anodenabteil;
(iv) Durchführen einer anaeroben Oxidationsreaktion, vorzugsweise einer biologischen Oxidationsreaktion in dem Anodenabteil;
(v) Reduzieren von Fe(III) zu Fe(II) an der Kathode (C) und Oxidieren von Fe(II), während ein Terminalelektronenakzeptor reduziert wird.

**12.** Verfahren gemäß Anspruch 11, wobei eine oder mehrere Substanzen verwendet werden, wie zum Beispiel Reagenzien für die anaerobe Oxidationsreaktion, wobei der Terminalelektronenakzeptor oder die optionalen Nährstoffe für den Fe(II)-Oxidierorganismus ausreichend nachgefüllt werden.

**13.** Verfahren gemäß Ansprüchen 11 - 12, wobei das Kathodenabteil der Vorrichtung in ein Eisenreduktionsabteil (R1), wobei Eisen (III) an der Kathode (C) reduziert wird, und ein Eisenoxidationsabteil (R2) getrennt ist, wobei Fe(II) durch Zufuhr eines Terminalelektronenakzeptors oxidiert wird, und wobei das Kathodenfluid zumindest teilweise von dem Eisenreduktionsabteil (R1) zu dem Eisenoxidationsabteil (R2), und von dem Eisenoxidationsabteil (R2) zu dem Eisenreduktionsabteil (R1) vorzugsweise durch Pumpen in einer runden Strömung übertragen wird.

**14.** Verfahren gemäß Anspruch 13, wobei die Vorrichtung des Weiteren ein Abteil (R3) zum Beseitigen eines Terminalelektronenakzeptors aufweist, wobei Mittel zum Beseitigen des Terminalelektronenakzeptors vorhanden sind, und wobei die zumindest teilweise Übertragung des Kathodenfluids von dem Eisenoxidationsabteil (R2) zu dem Eisenreduktionsabteil (R1) durch zumindest teilweises Übertragen des Kathodenfluids von dem Eisenoxidationsabteil (R2) zu dem Abteil (R3) zum Beseitigen des Terminalelektronenakzeptors stattfindet, und wobei dieses von dort zumindest teilweise zu dem Eisenreduktionsabteil (R1) übertragen wird.

**15.** Verfahren gemäß Anspruch 14, wobei ein Teil des Kathodenfluids von dem Eisenreduktionsabteil (R1) zu dem Abteil (R3) zum Beseitigen des Terminalelektronenakzeptors übertragen wird.

**Revendications**

**1.** Dispositif comprenant :

(i) un certain nombre de compartiments d'anode pourvus d'une anode (A), placée dans un fluide d'anode comprenant des réactifs pour une réaction d'oxydation, de préférence une réaction d'oxydation anaérobie, plus préférablement une réaction d'oxydation biologique anaérobie ;

(ii) un certain nombre de compartiments de cathode séparés des compartiments d'anode, pourvus d'une cathode (C), placée dans un fluide de cathode comprenant un accepteur d'électron terminal, un médiateur d'oxydoréduction, approprié pour transférer des électrons de la cathode (C) vers l'accepteur d'électron terminal, et un catalyseur (3), catalysant le transfert d'électrons du médiateur d'oxydoréduction vers l'accepteur d'électron terminal, dans lequel le médiateur d'oxydoréduction comprend le couple d'oxydoréduction Fe(II)/Fe(III) et le catalyseur comprend le catalyseur d'oxydation Fe(II) ; **caractérisé en ce que** les compartiments de cathode et les compartiments d'anode sont séparés par un certain nombre de membranes de sélection d'ions (1), dans lequel le nombre de membranes de sélection d'ions (1) comprend une membrane d'échange d'anions.

2. Dispositif selon la revendication 1, dans lequel le Fe(II) et le Fe(III) sont sensiblement présents dans le fluide de cathode sous une forme soluble, et dans lequel la concentration des ions Fe(III) et des ions Fe(II) sous forme soluble est de préférence dans la plage de 0,05 à 0,2 M, et plus préférablement de 0,01 à 0,1 M, par exemple de 0,05 à 0,1 M.

3. Dispositif selon les revendications 1 et 2, dans lequel le fluide de cathode a une valeur de pH de 0 à 5, de préférence de 0 à 3, plus préférablement de 2 à 3.

4. Dispositif selon les revendications 1 à 3, dans lequel l'accepteur d'électron terminal est l'oxygène.

5. Dispositif selon les revendications 1 à 4, dans lequel le catalyseur d'oxydation de Fe(II) (3) comprend un biocatalyseur d'oxydation de Fe(II), tel qu'un organisme d'oxydation de Fe(II), par exemple un micro-organisme d'oxydation de Fe(II), tel que l'*Acidithiobacillus ferrooxidans*, le *Leptospirillum ferrooxidans* ou le *Gallionella ferruginea*, ou un micro-organisme du genre *solfolobus* ou du genre *chlorobium*.

6. Dispositif selon les revendications 1 à 5, dans lequel le fluide de cathode comprend des réactifs pour la catalyse du catalyseur d'oxydation de Fe(I), tels que des substances nutritives pour un organisme d'oxydation de Fe(II).

7. Dispositif selon les revendications 1 à 6, dans lequel le nombre de membranes de sélection d'ions (1) comprend une membrane d'échange d'anions du côté du compartiment d'anode, de préférence en tant que partie d'une membrane bipolaire.

8. Dispositif selon les revendications 1 à 7, dans lequel le compartiment de cathode est divisé en un compartiment de réduction de fer (R1), dans lequel le Fe(III) est réduit au niveau de la cathode (C), et un compartiment d'oxydation de fer (R2), dans lequel le Fe(II) est oxydé sous l'application d'un accepteur d'électron terminal, et en outre des moyens sont présents pour transférer le fluide de cathode au moins partiellement du compartiment de réduction de fer vers le compartiment d'oxydation de fer et vice versa.

9. Dispositif selon la revendication 8, comprenant en outre un compartiment de retrait d'accepteur d'électron terminal (R3), dans lequel des moyens sont présents pour retirer l'accepteur d'électron terminal, et dans lequel les moyens pour transférer le fluide de cathode au moins partiellement du compartiment d'oxydation de fer (R2) vers le compartiment de réduction de fer (R1) sont appropriés pour transférer le fluide de cathode au moins partiellement du compartiment d'oxydation de fer (R2) vers le compartiment de retrait d'accepteur d'électron terminal (R3), et pour le transférer de là au moins partiellement vers le compartiment de réduction de fer (R1).

10. Dispositif selon la revendication 9, dans lequel les moyens pour retirer l'accepteur d'électron terminal comprennent un réducteur pour l'accepteur d'électron terminal, tel que le Fe(II) et/ou dans lequel des moyens sont présents pour transférer le fluide de cathode au moins partiellement du compartiment de réduction de fer (R1) vers le compartiment de retrait d'accepteur d'électron terminal (R3).

11. Procédé pour générer de l'énergie électrique comprenant les étapes consistant à :

(i) fournir un dispositif selon l'une des revendications 1 à 12 ;
(ii) connecter électriquement l'anode (A) et la cathode (C) ;
(iii) former et/ou maintenir des conditions anaérobies dans le compartiment d'anode ;
(iv) effectuer une réaction d'oxydation anaérobie, de préférence une réaction d'oxydation biologique dans le compartiment d'anode ;
(v) réduire le Fe(III) en Fe(II) au niveau de la cathode (C) et oxyder le Fe(II) tout en réduisant un accepteur d'électron terminal.

**12.** Procédé selon la revendication 11, dans lequel le réapprovisionnement en une ou plusieurs substances utilisées, telles que les réactifs pour la réaction d'oxydation anaérobie, l'accepteur d'électron terminal ou les substances nutritives optionnelles pour l'organisme d'oxydation de Fe(II) est effectué en quantités suffisantes.

**13.** Procédé selon les revendications 11 à 12, dans lequel le compartiment de cathode du dispositif est divisé en un compartiment de réduction de fer (R1), dans lequel le fer (III) est réduit au niveau de la cathode (C), et un compartiment d'oxydation de fer (R2), dans lequel le Fe(II) est oxydé sous l'application d'un accepteur d'électron terminal, et le fluide de cathode est transféré au moins partiellement du compartiment de réduction de fer (R1) vers le compartiment d'oxydation de fer (R2), et du compartiment d'oxydation de fer (R2) vers le compartiment de réduction de fer (R1), de préférence par pompage dans un écoulement circulaire.

**14.** Procédé selon la revendication 13, dans lequel le dispositif comprend en outre un compartiment de retrait d'accepteur d'électron terminal (R3), dans lequel des moyens sont présents pour retirer l'accepteur d'électron terminal, et dans lequel le transfert au moins partiel du fluide de cathode du compartiment d'oxydation de fer (R2) vers le compartiment de réduction de fer (R1) a lieu en transférant au moins partiellement le fluide de cathode du compartiment d'oxydation de fer (R2) vers le compartiment de retrait d'accepteur d'électron terminal (R3), et en le transférant au moins partiellement de là vers le compartiment de réduction de fer (R1).

**15.** Procédé selon la revendication 14, dans lequel une partie du fluide de cathode est transférée du compartiment de réduction de fer (R1) vers le compartiment de retrait d'accepteur d'électron terminal (R3).

EP 1 989 750 B1

$CO_2 + n.H^+$

$OM + H_2O$

A

$H^+$

$2.H^+ + \frac{1}{2}O_2$

$H_2O$

C

FIG. 1

$2.H+ + \frac{1}{2}O_2$

$H_2O$

FE(III)

FE(II)

e  e  e  e

C

$H^+$

FIG. 2

FIG. 3

FIG. 4

EP 1 989 750 B1

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004015806 A

**Non-patent literature cited in the description**

- *Electro chemistry communications,* 2005, vol. 7, 900-904

- **Rhoads, A. et al.** *Environmental Science & Technology,* 2005, vol. 39 (12